# EUROPEAN PATENT SPECIFICATION

(11) **EP 1 588 604 B1**
(45) Date of publication and mention of the grant of the patent: **03.10.2007**
(21) Application number: 04101713.8
(22) Date of filing: 23.04.2004
(51) Int. Cl.: A01F 15/07

(54) **Round Baler**
Rundballenpresse
Presse à balles rondes

(43) Date of publication of application: 26.10.2005
(73) Proprietor: DEERE & COMPANY, Moline, Illinois 61265-8098 (US)
(72) Inventor: Viaud, Jean, 70100, Arc-les-Gray (FR); Chapon, Emmanuel, 70100, Champvans (FR)
(74) Representative: Magin, Ludwig Bernhard

(56) References cited:
- EP-A- 0 309 936
- EP-A- 1 080 627
- EP-A- 1 308 079
- FR-A- 2 793 382

## Description

This invention relates to a round baler having side structures, fixed rolls, at least two moveable pivot arms carrying mobile rolls, and flexible baling means creating one endless circle and routed over said rolls to encompass a bale chamber.

European Patent specification EP 309 936 B1 discloses a round baler with a single set of endless belts, which are routed over a series of fixed and mobile rolls, whereas the mobile rolls are carried on two tensioning arm, which create several loops to provide sufficient bale length to extend over the circumference of a completed bale. A lower tensioning arm is applied by a spring, which extends with additional crop entering the bale chamber.

EP A1 309 941 discloses a round baler with two sets of endless belts and two tensioning arms, which are controlled by means of a single hydraulic cylinder. This hydraulic cylinder is used to control the tension in the two sets of belts to provide for controlled movement of the bale during formation and unloading.

EP A1 1 308 078 discloses a round baler with side structures and mobile and fixed rolls. A single tension arm is provided in about the center of the bale chamber to create a loop taking up the slack in the belts, when the bale chamber is empty. Another loop is formed by an unloading pivot frame, when it is moved to an unloading position.

EP A1 1 308 079 teaches a round baler with side structures and mobile and fixed rolls. A single tension arm is provided in the front area of the round baler to release more or less of a loop of the belts to the circumference of a growing bale. A tensioning roll acts onto the belts. The tensioning arm is provided with a pair of parallel rolls, which guide two strands of the belts and limit the bale chamber in its upper region. Another loop is formed by an unloading pivot frame, when it is moved to an unloading position.

From FR 2 793 382 is known a round baler with two pivot arms both being journalled on fixed sidewalls of a bale chamber, which can be opened by raising rear moveable sidewalls to unload a bale. Due to the weight of the rear sidewalls - the so-called gate - and its size, unloading a bale takes considerable time.

EP 1 308 079 A1 teaches a round baler with an unloading pivot frame operating outside a bale chamber and being equipped with one tensioning arm only. It has been found that this arrangement does not allow to create bales with are large diameter.

The problem this invention is based on is seen in the challenges of forming bales with a bigger diameter, like 2 m and more, whereas belts, chains or the like and their control means should be kept at a minimum to keep costs low.

This problem is solved in an innovative way by means of the teaching of claim 1, whereas advantageous features further developing the invention are given in the claims related to claim 1.

By means of this teaching, i.e. by arranging the second pivot arm totally or in part in an overlapping relationship to the potential bale chamber, i.e. when it is filled, the pivot arm does neither extend much over the boundary of the round baler, when being in a respective end position and does thus not hit an obstacle or move the center of gravity to an unwanted direction; nor will it occupy space in the front part of the round baler, which is needed to install a net wrapping and/or or tying device. The baling means may be a set of baling means like flexible belts or a chain and slat assembly or a single belt.

When an unloading pivot frame is used to release the bale from the bale chamber, it can at the same time, i.e. when the baling means get lose, form a loop to take out the slack from the baling means. Such a loop or such loops may be generated by one roll hitting a strand between two other rolls. Said roll may be a fixed roll or it may be one on the unloading pivot frame hitting a span between a fixed and a fixed or mobile roll.

While it is not excluded to use a rotary actuator, a linear actuator, commonly called a hydraulic cylinder, is preferred, since it may apply more power and is easier to connect. Hydraulic and electric drives are easy to control and available on round balers driven by a tractor or the like. By using only one, i.e. a common control for the two or more pivot arms as opposed to a spring or another control the costs are kept lower as by using more of them. In a case, in which e.g. three pivot arms are present, pairs of two may be connected and controlled by a common link, cable, or the like. The actuator may be driven hydraulically or electrically and may join the pivot arms directly or via links, cables, chains, or the like.

Resistance in the bale forming means against which the actuator is extended or retracted will result in tension in the baling means and this will create a dense bale. Such resistance may be variable during the baling process to provide a dense bale throughout its diameter or a soft core at the beginning and a dense bale later on.

By using lever arms to connect the actuator to the pivot arms, it is possible to select their position with respect to the pivot arm such, that the momentum can be transferred best. Another advantage is seen in the possibility to control the sense of rotation of the pivot arms, which allows to adjust to given structural restrictions, like rolls or struts crossing the path of the pivot arms.

When either pivot arm can move through the bale chamber, it can assist the bale movement during unloading or at least avoid, that the bale rolls back.

In order to provide for stability in the bale control means, i.e., to assure that both pivot arms do not move in an unwanted way when certain baling conditions appear or to keep the whole tensioning system in a certain position when springs or other forces apply, it is helpful to use another actuator to control the entire tensioning system.

Having three mobile rolls on a pivot arm enables to create more loops and/or to control the size of the bale chamber by releasing more or less baling means length.

When the second pivot arm is provided with mobile rolls at its ends, baling means strands running over rolls at said ends will neither be damaged nor create friction.

A second pivot arm having legs being located outside the bale chamber may pivot in a bigger region, since no fixed rolls or mobile rolls in the bale chamber will cross their path.

In a case, in which the actuator is arranged such, that it is not fully retracted, when the bale formation process starts, it may release baling means length in a first movement and may take slack out of the baling means in a second movement.

When the pivot arms rotate in the same or opposite directions during bale formation or subsequent to it, they may avoid running into each other, they may make best use of a common actuator, etc.

In a case, in which another fixed roll is provided adjacent said fixed roll and in which said another roll is located within the radial extension of the unloading pivot frame it is possible to create more than one loop and take up more slack or at least the same slack but with less movement and space required, thus.

In a round baler, in which an unloading pivot frame is provided with three mobile rolls, whereas the baling means is routed between them, the baling means and thus the bale chamber can easily be controlled and another loop can be created.

Heretoafter several embodiments of the invention are described in more detail and in relation to the drawing. It is shown in:
- fig. 1: a round baler according to a first embodiment having two pivot arms controlled by a single actuator in an empty stage, in schematic depiction and side view,
- fig. 2: the round baler of figure 1 with a completed bale,
- fig. 3: the round baler of figure 1 with a completed bale after unloading,
- fig. 4: a round baler according to a second embodiment having two pivot arms controlled by a single actuator in an empty stage, in schematic depiction and side view,
- fig. 5: the round baler of figure 4 with a completed bale,
- fig. 6: the round baler of figure 4 with a completed bale during unloading,
- fig. 7: a round baler according to a third embodiment having two pivot arms controlled by a single actuator in an empty stage, in schematic depiction and side view, and
- fig. 8: the round baler of figure 7 with a completed bale during unloading.

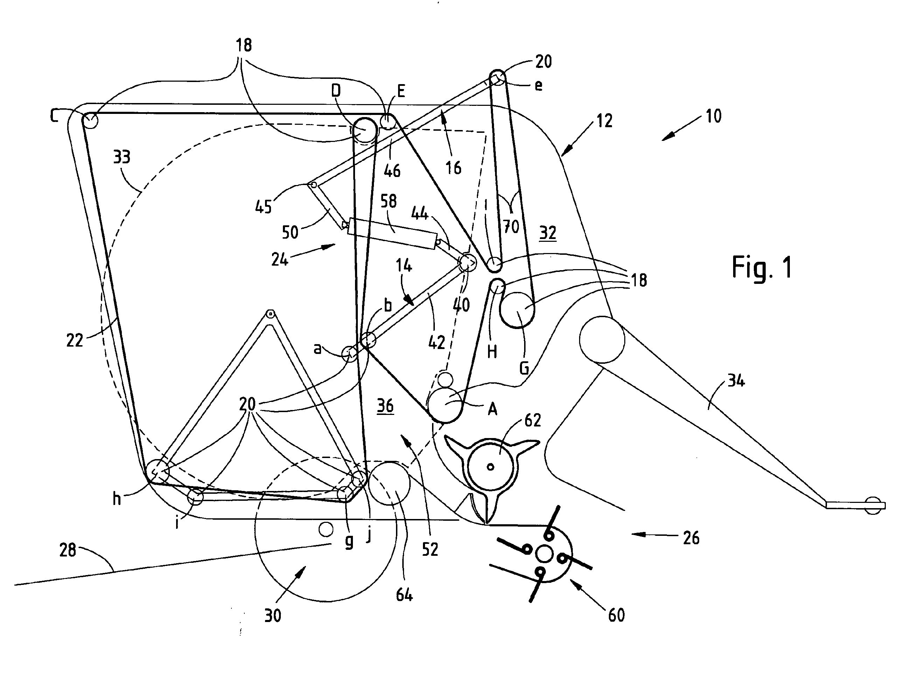

Figure 1 shows a round baler 10 having a chassis 12, a first pivot arm 14, a second pivot arm 16, fixed rolls 18, mobile rolls 20, baling means 22, a baling means control 24, a feeding mechanism 26 and an unloading mechanism 28.

This round baler 10 is of the variable chamber type and is pulled behind a tractor or the like (not shown) over a field to pick-up crop and to form round cylindrical bales 38 thereof, as this is known in general. Although it is not shown, this round baler 10 may comprise a twine, net or plastic wrapping system, known as well. Furthermore the round baler 10 may be part of a self-propelled vehicle or be of the pull type.

The chassis 12 substantially has a wheeled axle 30, side structures 32, to which walls 33 are attached, and a tongue 34. The wheeled axle 30 may be of the single rigid axle type as shown, or e.g. of the tandem axle type with or without spring suspension. Each side structure 32 is oriented vertically, carried by the wheeled axle 30 and forms the round baler 10 with its unshown walls laterally. Such side structure 32 and independent walls are disclosed in more detail in EP 1 264 531, to which this refers, but this invention is not limited to a use with such design. In this case the side structures 32 are not split in the area of a bale chamber 36 formed between them. The side structures 32 stay in place, when a formed bale 38 is ejected, as opposed to side walls in the prior art, of which a rear portion is lifted during unloading the bale 38. While in general the walls 33 could be an integral part of the side structures 32, they are shown is dashed lines in the following embodiments as parts, which are attached to the side structures 32 and assume as the only function to cover the bale chamber 36 laterally. Unlike in the prior art they are not split in halves and do not or hardly extend beyond the silhouette of a completed bale 38. If such separate walls 33 are present, the pivot arms 14 and 16 and the fixed rolls 18 are carried by other parts of the side structures 32. The tongue 34 is fixed to the side structures 32 as this is known, to connect the round baler 10 to the tractor (not shown). The distance between the side walls on the side structure 32 may be adjustable during operation.

The first pivot arm 14 is located between the side structures 32 and assumes substantially the form of an "U". The base of the "U" of the first pivot arm 14 is journalled on an axis 40 oriented horizontally and transverse to the travel direction of the round baler 10 and being fixed with respect to the side structures 32. The axis 40 is located approximately one third of the side structure 32 length from the front and one third of the side wall or side structure 32 height from the top. Legs 42 of the "U" of the first pivot arm 14 extend parallel to the side structure 32 or its side walls and are pivotable in a vertical direction between a 7:00 (bale start position) and 11:00 (full bale position) o'clock pointer position, when viewed from the R.H. side, shown in the drawing. The length of the legs 42 reaches almost half of the height of the side structure 32, i.e. they terminate substantially close to a line between a fixed roll D and a mobile roll g, when an unloading pivot frame 54 is in its lower position. Rigidly connected to the legs 42 or to the base of the "U" is at least one lever arm 44.

The second pivot arm 16 is of similar "U" construction as the first pivot arm 14, whereas an axis 45 for the end regions of legs 46 for the base of the "U" is located at about half way of the length of round baler 10 (without tongue) close to the roll D, i.e. in the upper region, but slightly below and behind of it. The legs 46 extend outside the bale chamber 36, i.e. they face the outer surfaces of the side walls and terminate approximately at the front upper corner of the round baler 10. At the end region close to the axis 45 lever arms 50 are fixed to the legs 46 and extend substantially perpendicular therefrom. At the end remote from axis 45 the legs 46 are connected by the base of the "U". The legs 46 may pivot in a range between a 1:00 position (unloading the bale) over a 2:00 position (bale start position) and a 4:00 o'clock (full bale position) pointer position. They run parallel to the side structures 32 and are pivotable in a vertical direction.

Fixed rolls 18 have end portions being rotatably journalled in, on or at the side structures 32, whereas they all run parallel to each other and parallel to the ground on which the round baler 10 stands. Depending on the chosen embodiment more or less fixed rolls 18 may be present, whereas most of them are of the same design, i.e. a roll body journalled on a shaft or stub shaft or a roll body with fixed stub shafts rotatably received in bearings (not shown) in side structures 32. However, the diameter of the rolls 18 may be different from roll 18 to roll 18. It is obvious that "fixed" means, that their position is fixed, whereas the rolls 18 as such can rotate. For the sake of the ongoing description the fixed rolls 18 are designated by capital letters A to I, whereas:
A refers to a fixed roll 18 slightly above an inlet 52 to the bale chamber 36 and above and close to the feeding mechanism 26;
C refers to a fixed roll 18 in the upper rear corner area of round baler 10;
D refers to a fixed roll 18 close to the upper edge of the side structures 32 and at about the half of their length;
E refers to a fixed roll 18 also close to the upper edge of the side structure 32, but between the upper front corner area of the round baler 10 and the fixed roll 18 referenced by D and close to latter;
G refers to a fixed roll 18 located close to a place where the tongue 34 meets the side structure 32, i.e. half way of the height of the side structure 32 and close to their front edge;
H refers to a fixed roll 18 nearby the axis 40 about which the first pivot arm 14 swings and located above and rearward of roll G and
I refers to a fixed roll 18 very close to fixed roll 18 / H, but directly above it.

At least one of the rigid rolls 18 is driven and formed such that it may transfer movement energy from the driven roll 18 to the baling means 22. Some of the rolls 18 may have guide means for the baling means 22.

The mobile rolls 20, i.e. those, the position of which may vary during the baling process, run parallel to the fixed rolls 18 and are of comparable design. The mobile rolls 20 are designated by small letters a to j, whereas:
a) refers to a mobile roll 20 in the end region (remote from the axis 40) of the legs 42 of the first pivot arm 14;
b) refers to a mobile roll 20 close to the end region (remote from the axis 40) of the legs 42 of the first pivot arm 14;
e) refers to a mobile roll 20 in the end region (remote from the axis 45) of the legs 46 of the second pivot arm 16;
g) refers to a mobile roll 20 located in a lower front corner area (as seen in fig. 1) of unloading pivot frame 54;
h) refers to a mobile roll 20 located in a lower rear corner area (as seen in fig. 1) of the unloading pivot frame 54;
i) refers to a mobile roll 20 located between the rolls g and h, but close to h and slightly below a line through rolls g and h of the unloading pivot frame 54 and
j) refers to a mobile roll 20 very close to, above and forward of roll g, where this mobile roll j is not needed if a mobile roll g having a big diameter is use instead of.

The unloading pivot frame 54 has substantially the form of a triangle, an upper corner (as seen in fig. 1) of which is journalled about an axis 56, parallel to the axes 40, 45 and close to the center of bale chamber 36, when being filled. The rear lower corner are of the unloading pivot frame 54 finds itself in the rear lower corner area of the side structures 32 and the front lower corner area of the unloading pivot frame 54 is located immediately behind a lower roll 64 to be described later - each when viewing figure 1.

The baling means 22 in this embodiment is formed by a set of belts, running parallel to each other in laterally spaced relationship. Instead of, a single endless belt or a chain and slat conveyor could be used to provide for flexibility, allowing to run over the rolls 18 and 20. The routing of the baling means 22 is described in the following with respect to the embodiment and mode of operation shown in figure 1.

Starting from fixed roll A the routing of the baling means 22 is: H - between H and G - G - e - between I and H - I - E - C - between h and i - g - j - between a and b - D - between a and b - A. In this routing a loop 70 is formed by means of the strand between rolls I and G, as the baling means 22 is routed over roll e. Another loop - no reference no. - is formed about roll D, whereas its size decreases with the growing bales and is determined by the position of the mobile rolls a and b.

The baling control means 24 is composed of various not shown pump, sump, valves, sensors, lines, a CPU, etc. and for the pivot arms 14, 16 one actuator 58 extending between and pivotally fixed to lever arm 44 of the first pivot arm 14 and lever arm 50 of the second pivot arm 16. Said control means 24 receives and computes signals coming from the various round baler components as well as from an operator. The output signals of the CPU controlling the actuator 58 are such, that during bale formation a certain resistance acts onto the pivot arms 14 and/or 16 to provide for a wanted density in the bale 38 and that after unloading the bale 38, the pivot arms 14, 16 return to their initial bale starting position. The actuator 58 of this embodiment is in the form of a single or double acting linear hydraulic motor; alternatively it could be an electric motor. As shown in figures 1 to 3 and different from the subsequent embodiments, only this actuator 58 is used to control the position of the first and of the second pivot arm 14, 16. This is possible, since the forces applying both pivot arms 14, 16 are quite balanced. Alternatively to the use of an actuator 58 in the form of a hydraulic cylinder attached directly to the pivot arms 14, 16 or their lever arms 44, 50 one could use a hydraulic cylinder for one direction and a spring for a movement in the other direction, one could use a strong spring only, like a coil spring, one could use an electric or pneumatic motor, one could apply the actuator - being in the form of a hydraulic cylinder, of a spring, or of a motor - via a cable or linkage to both pivot arms 14, 16 or directly to one of the pivot arms 14, 16 and via a cable or link to the other pivot arm 16, 14. This applies as well to the subsequent embodiments, in which more than one actuator is used. The unloading pivot frame 54 is raised and if need be lowered by an unshown hydraulic actuator, which is controlled as well by these baling control means to achieve a synchronized movement.

The feeding mechanism 26 is designed in the usual way, i.e. it includes a pick-up 60, downstream thereof a conveyor 62 formed as a cutting unit, a converging auger or other transport mechanism and in the area of the inlet 52 the bottom roll 64, which all together assist in taking crop from the ground and deliver it through the inlet 52 into the bale chamber 36, where it is rolled to a bale 38.

The unloading mechanism 28 is formed as a ramp - remote controlled or spring loaded - on which the unloaded bale 38 rolls down onto the ground, as this is known.

Having described the structure of the round baler 10 so far, its function is as follows, starting from the situation in figure 1.

In figure 1 spans of the baling means 22 between a and j as well as between b and A form two sides of the bale chamber 36, which is kept minimal, since pivot arm 14 is in its lowest, 7:00 position. Roll j lies adjacent to bottom roll 64, since the unloading pivot frame 54 assumes its lowest position, which brings the span between rolls a and j into a vertical orientation. The actuator 58 assumes its minimal length and first pivot arms 14 assumes its lowest location, while second pivot arm is in the about 2:00 position.

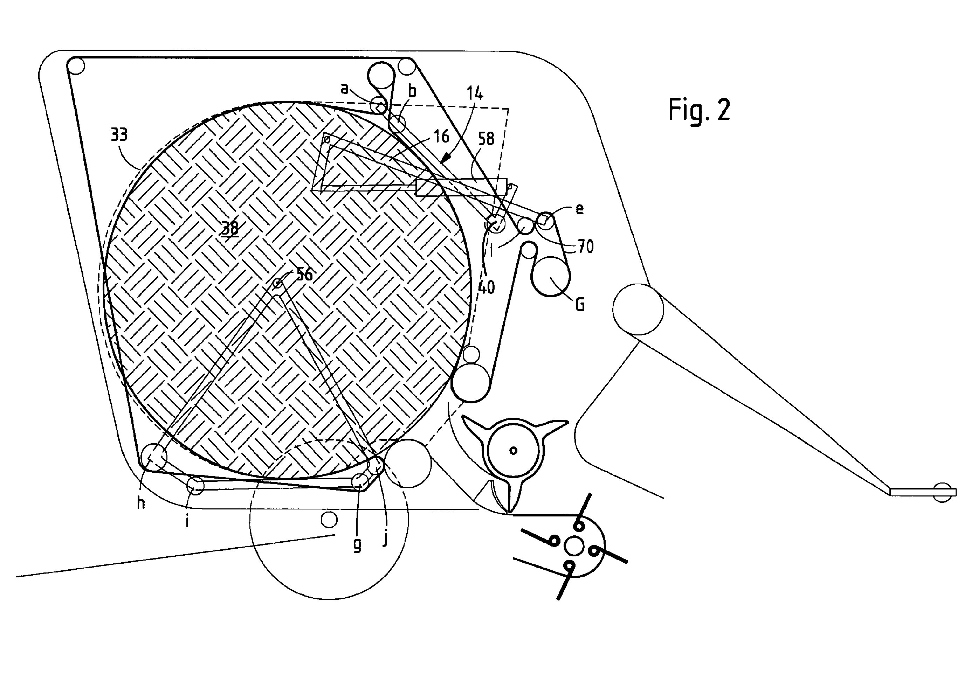

When crop is fed continuously through the inlet 52 a bale 38 will start to grow and push pivot arm 14 upward thereby extracting actuator 58 against a force provided by resistance in the baling control means 24, for example created by a nozzle, a valve or the like. Simultaneously pivot arm 16 will be pulled downwardly by the baling means 22 shortening the span between rolls G and I, i.e. loop 70, in order to adjust to the growing circumference of the bale 38. Both pivot arms 14, 16 rotate clockwise. Movement of the pivot arms 14, 16 and thus also of the mobile rolls a, b and e continuous until the bale 38 has reached its desired or maximum size - see figure 2. When the bale chamber 36 is full the pivot arm 14 reached its highest and the pivot arm 16 reached its lowest position, in which the first pivot arm 14 follows approximately the circumference of the bale 38. Accordingly the actuator 58 has been extracted to its maximum length. The unloading pivot frame 54 and the rolls g to j are still in their lower position and together with the baling means 22 support the bale 38. Since the second pivot arm 16 moves towards fixed roll G, the loop 70 shortens close to non-existence.

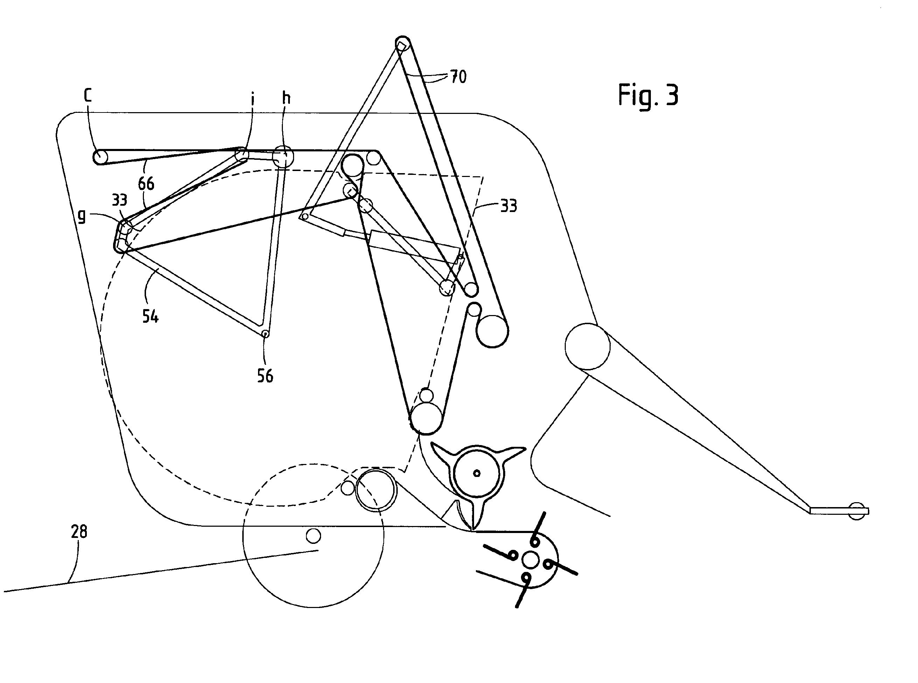

In order to unload the bale 38 the unloading pivot frame 54 is pivoted clockwise about axis 56 into the position shown in figure 3, in which a line through the center of rolls g and h shows an inclination to the ground of about 30 degrees. Due to the upward movement also roll i moved upwardly and hit the span between rolls g and C. Roll i creates a loop 66 (fig. 3) to take out slack in the baling means 22, which appears, as soon as the bale 38 rolls down the unloading mechanism 28. As soon as the bale 38 has left the bale chamber 36, the second pivot arm 16 moves upward in a counter clockwise direction, thereby enlarging the loop 70 to the biggest possible extent. Afterwards both pivot arms 14, 16 move down and finally the situation shown in figure 1 is reached again.

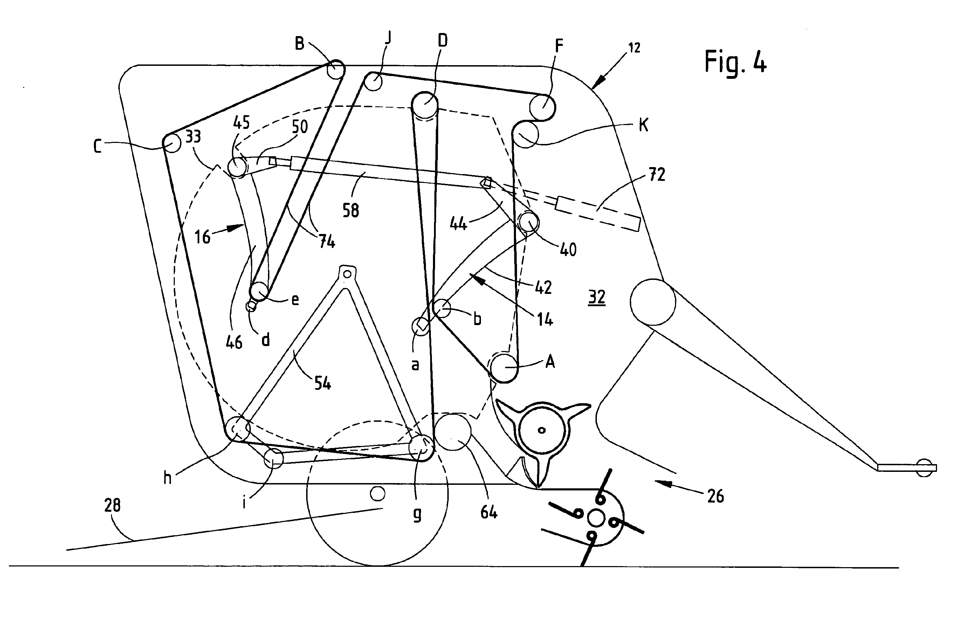

Figures 4 to 6 show a second embodiment having many components in common with the first embodiment, especially one actuator 58 for two pivot arms 14, 16.

The purpose of the round baler 10 and the design of its chassis 12 are the same or equivalent to that of the first embodiment.

The first pivot arm 14 has the same design and is located and journalled in a similar or identical way. In particular it has lever arms 44, to which actuator 58 may be connected.

The second pivot arm 16 is different from the one of the first embodiment in some respects. The second pivot arm 16 of the second embodiment is journalled on axis 45, which is located in the wider area of the rear upper corner of the side structures 32 and close to the roll C. The legs 46 extend inside the maximum shape of the bale chamber 36, and terminate slightly below the middle of the height of the side structure 32. When the bale chamber 36 is empty, as this is shown in figure 4, the legs 46 run substantially vertical, whereas the axis 45 is situated on top of the legs 46. At the end region close to the axis 45 lever arms 50 are fixed to the legs 46 and extend substantially perpendicular therefrom. At axis 45 the legs 46 are connected by the base of the "U". The legs 46 may pivot in a range between a 6:00 and a 2:00 o'clock pointer position.

During operation both pivot arms 14, 16, rotate in contrary direction, i.e. as viewed first pivot arm 14 clockwise and second pivot arm 16 counter clockwise, each when the bale 38 is growing.

Fixed rolls 18 A, C and D are in the same or substantially the same position as those of the first embodiment. However fixed rolls B, F, J and K are added, which are located at different places. Rolls B and J are arranged very close to each other and between fixed rolls C and D, however slightly above a line extending through the centers of the rolls C and D and thus close to the upper edge of the side structure 32. Rolls F and K are arranged in the wider front upper corner area of the side structures 32. Rolls F and K are located very close to each other, whereas roll K is offset with respect to roll F to the rear and below of it. This roll K is provided to increase the amount of wrap around the drive roll F and to move the respective strand of the baling means 22 out of contact with the first pivot arm 14 between its legs 42.

Again only rolls a and b are provided on first pivot arm 14. Second pivot arm 16 now bears two mobile rolls d and e at the end of it remote from axis 45, whereas mobile roll 20,d forms the end of the second pivot arm 16 and its direct linear extension, while roll e is situated radially inward from roll 20,d on the second pivot arm 16. Roll 20,e forms the idling roll 20, while roll 20,d is used to avoid interference as this will be described later. Rolls g, h, and i are present on the unloading pivot frame 54, not mobile roll j of the second embodiment; instead of mobile roll j, mobile roll g has a bigger diameter.

The baling means 22 is equivalent to the one in the first embodiment.

The baling control means 24 contains again one actuator 58 between the lever arms 44 and 50, whereas said actuator 58 is joined to these lever arms 44, 50 above the axes 40, 45, when the round baler 10 assumes the position shown in figure 4, i.e. when the bale chamber 36 is empty. In addition to the baling control means 24 of the first embodiment a second actuator 72 is possibly provided, which at one end is fixed to the chassis 12 or the side structures 32 and which at its other end is connected to the arm 44, where the first actuator 58 applies to it. It should be understood for this as well as for the third embodiment, that one actuator 58 is meant at least one, whereas one may be provided on each side of the round baler 10. The same is true for the second actuator 72. While the first actuator 58 is used to control the relative movement between the two pivot arms 14, 16 as in the first embodiment, the second actuator 72 - if present - is used to control their positions particularly to synchronize displacement of pivot arm 16 in relation to the bale position during its ejection and to take advantage of the pivot arm 16 position to positively push the bale 38 out. It is made clear hereby, that mostly the second actuator 72 is an option, rather than a must.

The feeding mechanism 26, the unloading mechanism 28, the unloading pivot frame 54 and the bottom roll 64 are similar or identical to those of the first and the second embodiment.

All in all and starting again from fixed roll A the routing of the baling means 22 is: K - between K and F - F - J - between e and d - e - B - C - h - between h and i - g between a and b - D - between a and b - A. In this routing another loop 74 is formed by means of the strand between rolls B and J, as the baling means 22 is routed over roll e. This loop 74 is used instead of a loop 70 about roll c in the first embodiment. Bale formation starts when the round baler 10 assumes the position as shown in fig. 4. In this position the first and second pivot arms 14, 16 assume their lowest position and the unloading pivot frame 54 is in its lowest position. The first actuator 58 is shortened to its minimum, the second actuator 72 - if present - is extended to its maximum. The bale chamber 36 has the smallest dimension and is substantially of triangular shape.

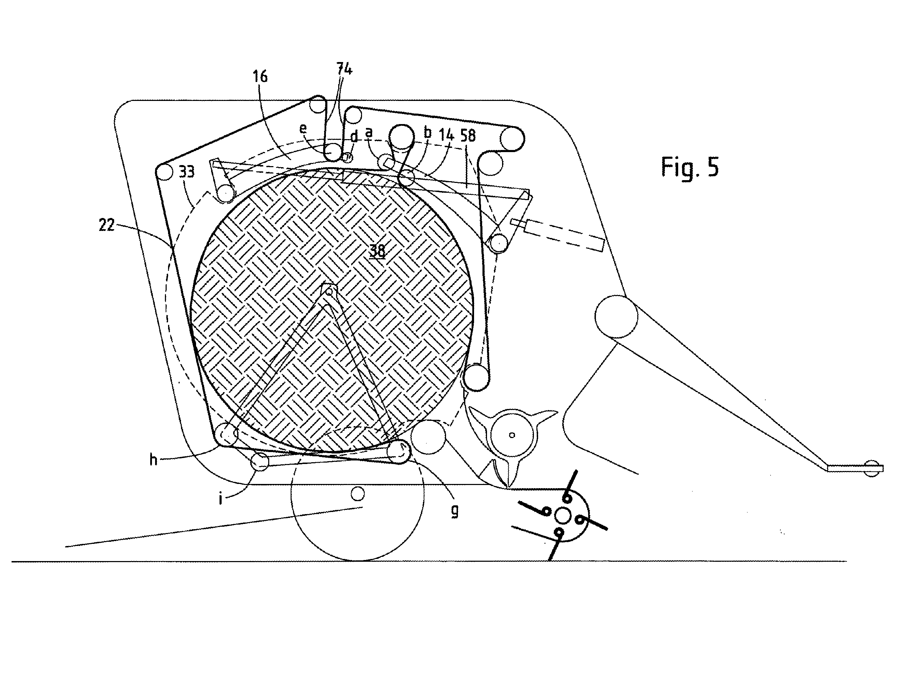

When crop is fed continuously through the inlet 52 a bale 38 will start to grow and push pivot arm 14 clockwise upwardly as viewed thereby extracting actuator 58 against a force provided by resistance in the baling control means 24, for example created by a nozzle, a valve or the like. Simultaneously pivot arm 16 will be pulled upwardly by the baling means 22, however counter clockwise, thereby shortening the loop 74 in order to adjust to the growing circumference of the bale 38. Movement of the pivot arms 14, 16 and thus also of the mobile rolls a, b, d and e continues until the bale 38 has reached its desired or maximum size - see figure 5. When the bale chamber 36 is full both pivot arms 14, 16 reached their highest position, in which their longitudinal axes extend like a roof and under angles of about 20 degrees; both follow approximately the circumference of the bale 38. Accordingly the actuator 58 has been extracted to its maximum length. The unloading pivot frame 54 and the rolls g to i are still in their lower position and together with the baling means 22 support the bale 38. The second actuator 72 is shortened to is minimum.

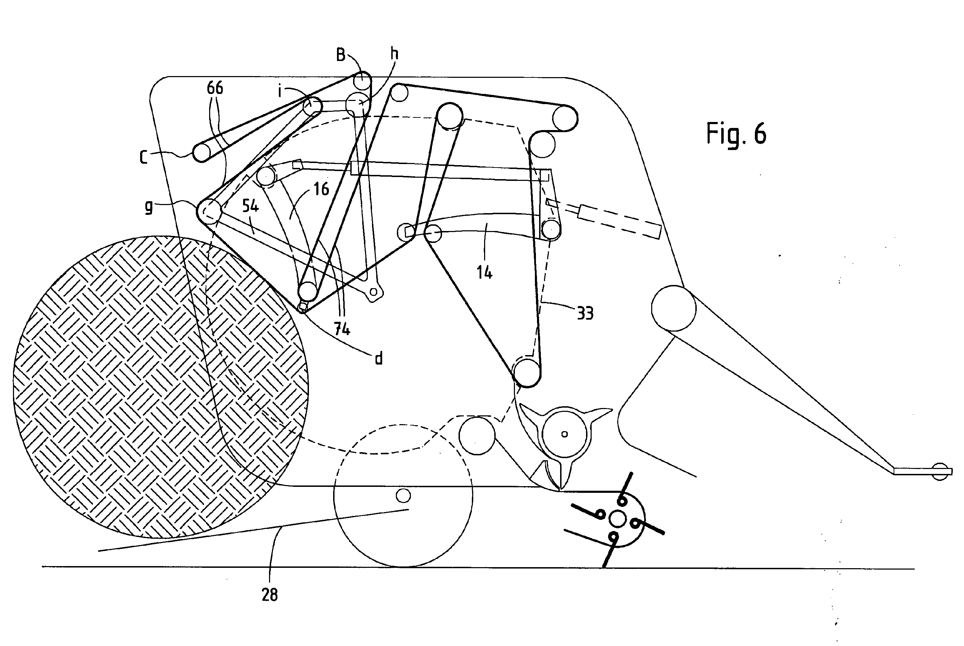

In order to unload the bale 38 the unloading pivot frame 54 is pivoted clockwise about axis 56 into the position shown in figure 6, in which a line through the center of rolls g and h shows an inclination to the ground of about 30 degrees. Due to the upward movement also roll i moved upwardly and hit the span between rolls g and C. Roll i creates a loop 66 (fig. 6) to take out slack in the baling means 22, which appears, as soon as the bale 38 rolls down the unloading mechanism 28. As soon as the bale 38 has left the bale chamber 36, the second pivot arm 16 moves downward in a clockwise direction, thereby enlarging the loop 74 to the biggest possible extent and driving the bale 38 out. In this situation mobile roll d avoids that two strands of the baling means 22 gets in contact with each other. Afterwards or simultaneously actuator 72 extends again, first pivot arm 14 moves down and finally the situation shown in figure 4 is reached again.

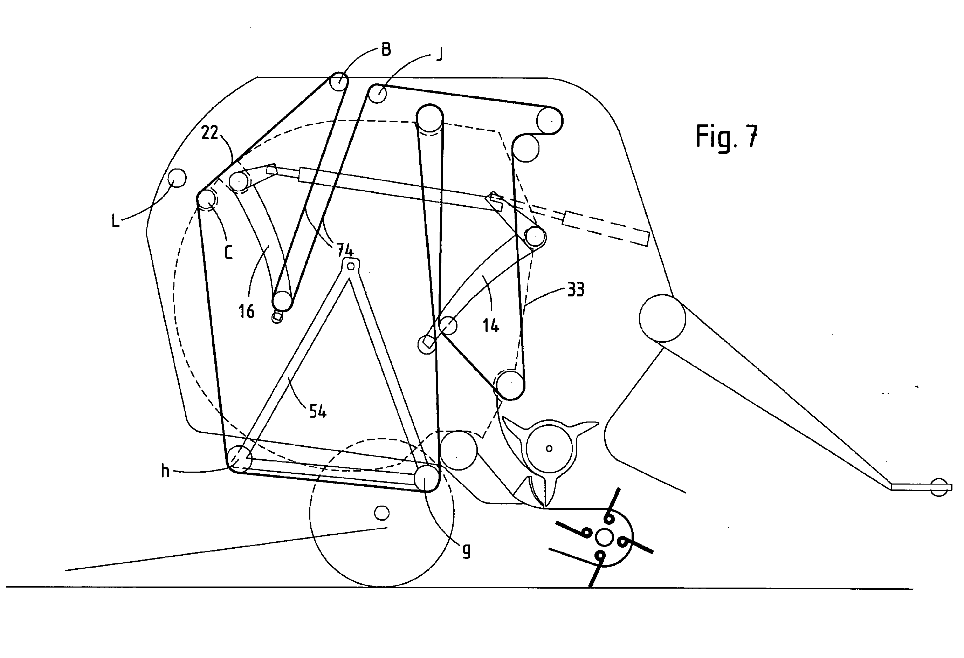

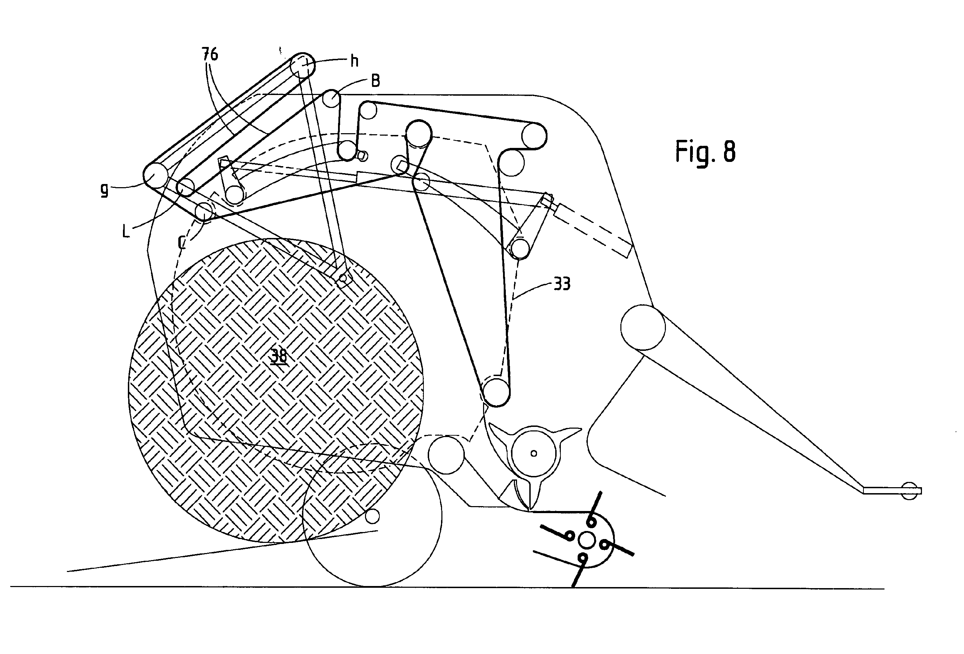

Figures 7 and 8 show a third embodiment being different from the second embodiment insofar, as the unloading pivot frame 54 has mobile rolls h and g only and as a fixed roll L is added very close but slightly above and rearward of fixed roll C, whereas the baling means 22 is routed through the gap between the fixed rolls L and C. Furthermore the unloading pivot frame 54 is located outside the side structures 32. The remainder of the round baler 10 including the routing of the baling means 22 and the use of a first and a second actuator 58 and 72 is identical.

The function during forming a bale 38 is identical to the function in the round baler 10 of the third embodiment.

When a finished bale 38 is unloaded and the unloading pivot frame 54 is raised, a loop 76 is formed in the strand between the rolls h and B when said strand hits the fixed roll L. This loop 76 is created to take out slack in the baling means 22, which appears, as soon as the bale 38 rolls down the unloading mechanism 28. Loop 76 is used instead of loop 66 (fig. 8).

## Claims

1. Round baler (10) having side structures (32), fixed rolls (18), at least two moveable pivot arms (14, 16) carrying mobile rolls (20), and flexible baling means (22) creating one endless circle and routed over said rolls (18, 20) to encompass a bale chamber (36), **characterized in that**:
a) one pivot arm (14) has at least two rolls (20,a,b) to guide a loop of the baling means (22) between them, which loop runs over a fixed roll (18,D)at one side and opens to the bale chamber (36) at the other side,
b) one pivot arm (16) has at least one mobile roll (20,e) acting on a strand of the baling means (22) extending between two rolls (18,G, 18,I or 18,B, 18,J) of which at least one is fixed, and being coincident at least partly with the potential bale chamber (36).
c) an unloading pivot frame (54) provided with one or more rolls (20, h, g,) and creating another loop in the baling means (22) by means of a fixed roll (18 C, L) or mobile roll (20 i) when moving towards an unloading position.

2. Round baler (10) according to claim 1, **characterized in that**:
a) one fixed roll (18,C) is provided in or adjacent to the area crossed by the moving unloading pivot frame (54), and
b) a strand of the baling means (22) is applied to said fixed roll (18,C) by moving the unloading pivot frame (54).

3. Round baler (10) according to one or more of the preceding claims, **characterized by** at least one actuator (58) controlling the movement of the first and/or second pivot arm (14, 16).

4. Round baler (10) according to one or more of the preceding claims, **characterized in that** the actuator (58) is formed as a linear motor, being driven hydraulically or electrically.

5. Round baler (10) according to one or more of the preceding claims, **characterized in that** the actuator (58) moves against resistance, while the bale chamber (36) gets filled.

6. Round baler (10) according to one or more of the preceding claims, **characterized in that** the actuator (58) joins the pivot arms (14, 16) at lever arms (44, 50), which may be arranged such, that both pivot arms (14, 16) provide a rotation in the same or in opposite directions.

7. Round baler (10) according to one or more of the preceding claims, **characterized in that** the second pivot arm (16) moves through the bale chamber (36) while or after a bale (38) is unloaded.

8. Round baler (10) according to one or more of the preceding claims, **characterized in that** a second actuator (72) is provided, acting directly or non-directly onto the first actuator (58).

9. Round baler (10) according to one or more of the preceding claims, **characterized in that** the first pivot arm (14) is provided with a mobile roll to idle the baling means (22) and with two mobile rolls (20,a, 20,b) to close the bale chamber (36) in an upper region.

10. Round baler (10) according to one or more of the preceding claims, **characterized in that** the second pivot arm (16) is provided with mobile rolls (20,d) at its ends.

11. Round baler (10) according to one or more of the preceding claims, **characterized in that** the second arm (16) has legs (46) being located outside the bale chamber (36).

12. Round baler (10) according to one or more of the preceding claims, **characterized in that** the actuator (58) is arranged such, that it is not fully retracted, when the bale formation process starts.

13. Round baler (10) according to one or more of the preceding claims, **characterized in that** the pivot arms (14, 16) rotate in the same or opposite directions during bale formation.

14. Round baler (10) according to one or more of the preceding claims, **characterized in that** another fixed roll (18,L) is provided adjacent said fixed roll (18,C) and **in that** said another roll (18,L) is located within the radial extension of the unloading pivot frame (54) with respect to its pivot axis (56).

15. Round baler (10) according to one or more of the preceding claims, **characterized in that** the unloading pivot frame (54) is provided with three mobile rolls (20,g, 20,h, 20,i), whereas the baling means (22) is routed between them.

## Patentansprüche

1. Rundballenpresse (10) mit Seitenstrukturen (32), ortsfesten Rollen (18), mindestens zwei beweglichen Schwenkarmen (14, 16), die bewegliche Rollen (20) tragen, und einem flexiblen Ballenpressmittel (22), das einen Endloskreis bildet und über die Rollen (18, 20) geführt ist, um eine Ballenkammer (36) zu umfassen, **dadurch gekennzeichnet, dass**:
a) ein Schwenkarm (14) mindestens zwei Rollen (20,a,b) aufweist, um eine Schlaufe des Ballenpressmittels (22) dazwischen zu führen, wobei die Schlaufe an einer Seite über eine ortsfeste Rolle (18,D) läuft und sich an der anderen Seite zur Ballenkammer (36) öffnet,
b) ein Schwenkarm (16) mindestens eine bewegliche Rolle (20,e) aufweist, die auf einen Trum des Ballenpressmittels (22) einwirkt, das sich zwischen zwei Rollen (18,G, 18,I oder 18,B, 18,J) erstreckt, von denen mindestens eine ortsfest ist, und zumindest teilweise mit der potentiellen Ballenkammer (36) zusammenfällt,
c) ein Entladeschwenkrahmen (54) mit einer oder mehreren Rollen (20,h,g) versehen ist und mittels einer ortsfesten Rolle (18C, L) oder beweglichen Rolle (20 i) bei Bewegung in eine Entladeposition eine weitere Schlaufe im Ballenpressmittel (22) erzeugt.

2. Rundballenpresse (10) nach Anspruch 1, **dadurch gekennzeichnet, dass**:
a) eine ortsfeste Rolle (18,C) in oder neben dem Bereich vorgesehen ist, der von dem sich bewegenden Entladeschwenkarm (54) durchquert wird, und
b) ein Trum des Ballenpressmittels (22) durch Bewegen des Entladeschwenkrahmens (54) an die ortsfeste Rolle (18,C) angelegt wird.

3. Rundballenpresse (10) nach einem oder mehreren der vorhergehenden Ansprüche, **gekennzeichnet durch** mindestens ein Stellglied (58), das die Bewegung des ersten und/oder zweiten Schwenkarms (14, 16) steuert.

4. Rundballenpresse (10) nach einem oder mehreren der vorhergehenden Ansprüche, **dadurch gekennzeichnet, dass** das Stellglied (58) als ein Linearmotor ausgebildet ist, der hydraulisch oder elektrisch angetrieben wird.

5. Rundballenpresse (10) nach einem oder mehreren der vorhergehenden Ansprüche, **dadurch gekennzeichnet, dass** sich das Stellglied (58) gegen Widerstand bewegt, während die Ballenkammer (36) gefüllt wird.

6. Rundballenpresse (10) nach einem oder mehreren der vorhergehenden Ansprüche, **dadurch gekennzeichnet, dass** das Stellglied (58) die Schwenkarme (14, 16) an Hebelarmen (44, 50) verbindet, die so angeordnet sein können, dass beide Schwenkarme (14, 16) eine Drehung in der gleichen oder in entgegengesetzter Richtung bereitstellen.

7. Rundballenpresse (10) nach einem oder mehreren der vorhergehenden Ansprüche, **dadurch gekennzeichnet, dass** sich der zweite Schwenkarm (16) während des oder nach dem Entladen(s) eines Ballens (38) durch die Ballenkammer (36) bewegt.

8. Rundballenpresse (10) nach einem oder mehreren der vorhergehenden Ansprüche, **dadurch gekennzeichnet, dass** ein zweites Stellglied (72) vorgesehen ist, das direkt oder indirekt auf das erste Stellglied (58) einwirkt.

9. Rundballenpresse (10) nach einem oder mehreren der vorhergehenden Ansprüche, **dadurch gekennzeichnet, dass** der erste Schwenkarm (14) mit einer beweglichen Rolle versehen ist, um das Ballenpressmittel (22) freilaufen zu lassen, und mit zwei beweglichen Rollen (20,a, 20,b), um die Ballenkammer (36) in einem oberen Bereich zu schließen.

10. Rundballenpresse (10) nach einem oder mehreren der vorhergehenden Ansprüche, **dadurch gekennzeichnet, dass** der zweite Schwenkarm (16) an seinen Enden mit beweglichen Rollen (20,d) versehen ist.

11. Rundballenpresse (10) nach einem oder mehreren der vorhergehenden Ansprüche, **dadurch gekennzeichnet, dass** der zweite Arm (16) Schenkel (46) aufweist, die sich außerhalb der Ballenkammer (36) befinden.

12. Rundballenpresse (10) nach einem oder mehreren der vorhergehenden Ansprüche, **dadurch gekennzeichnet, dass** das Stellglied (58) so angeordnet ist, dass es nicht voll eingezogen ist, wenn der Ballenherstellungsprozess beginnt.

13. Rundballenpresse (10) nach einem oder mehreren der vorhergehenden Ansprüche, **dadurch gekennzeichnet, dass** sich die Schwenkarme (14, 16) bei der Ballenherstellung in der gleichen oder in entgegengesetzter Richtung drehen.

14. Rundballenpresse (10) nach einem oder mehreren der vorhergehenden Ansprüche, **dadurch gekennzeichnet, dass** eine weitere ortsfeste Rolle (18,L) neben der ortsfesten Rolle (18,C) vorgesehen ist und dass sich die weitere Rolle (18,L) in der radialen Erstreckung des Entladeschwenkrahmens (54) bezüglich seiner Schwenkachse (56) befindet.

15. Rundballenpresse (10) nach einem oder mehreren der vorhergehenden Ansprüche, **dadurch gekennzeichnet, dass** der Entladeschwenkrahmen (54) mit drei beweglichen Rollen (20,g, 20,h, 20,i) versehen ist, während das Ballenpressmittel (22) dazwischen geführt wird.

## Revendications

1. Presse à balles rondes (10) ayant des structures latérales (32), des rouleaux fixes (18), au moins deux bras de pivot mobiles (14, 16) supportant des rouleaux mobiles (20), et des moyens de pressage de balles flexibles (22) créant un cercle sans fin et acheminés sur lesdits rouleaux (18, 20) pour englober une chambre de compression de balles (36), **caractérisée en ce que** :
a) un bras de pivot (14) a au moins deux rouleaux (20, a, b) pour guider une boucle des moyens de pressage de balles (22) entre eux, laquelle boucle circule sur un rouleau fixe (18, D) au niveau d'un côté et s'ouvre sur la chambre de compression de balles (36) au niveau de l'autre côté,
b) un bras de pivot (16) a au moins un rouleau mobile (20, e) agissant sur un brin des moyens de pressage de balles (22) s'étendant entre deux rouleaux (18, G, 18, I ou 18, B, 18, J) dont au moins un est fixe, et coïncidant au moins partiellement avec la chambre de compression de balles potentielle (36),
c) un châssis de pivot de déchargement (54) prévu avec un ou plusieurs rouleaux (20, h, g) et créant une autre boucle dans les moyens de pressage de balles (22) au moyen d'un rouleau fixe (18, C, L) ou d'un rouleau mobile (20, I) lors du déplacement vers une position de déchargement.

2. Presse à balles rondes (10) selon la revendication 1, **caractérisée en ce que** :
a) un rouleau fixe (18, C) est prévu dans ou de manière adjacente à la zone traversée par le châssis de pivot de déchargement mobile (54), et
b) un brin des moyens de pressage de balles (22) est appliqué sur ledit rouleau fixe (18, C) en déplaçant le châssis de pivot de déchargement (54).

3. Presse à balles rondes (10) selon une ou plusieurs des revendications précédentes, **caractérisée par** au moins un actionneur (58) qui contrôle le mouvement du premier et/ou du second bras de pivot (14, 16).

4. Presse à balles rondes (10) selon une ou plusieurs des revendications précédentes, **caractérisée en ce que** l'actionneur (58) est formé comme un moteur linéaire, qui est entraîné de manière hydraulique ou électrique.

5. Presse à balles rondes (10), selon une ou plusieurs des revendications précédentes, **caractérisée en ce que** l'actionneur (58) se déplace contre une certaine résistance alors que la chambre de compression de balles (36) est remplie.

6. Presse à balles rondes (10) selon une ou plusieurs des revendications précédentes, **caractérisée en ce que** l'actionneur (58) assemble les bras de pivot (14, 16) au niveau des bras de levier (44, 50) qui peuvent être agencés de sorte que les deux bras de pivot (14, 16) fournissent une rotation dans le même sens ou dans un sens opposé.

7. Presse à balles rondes (10) selon une ou plusieurs des revendications précédentes, **caractérisée en ce que** le second bras de pivot (16) se déplace à travers la chambre de compression de balles (36) pendant ou après qu'une balle (38) a été déchargée.

8. Presse à balles rondes (10) selon une ou plusieurs des revendications précédentes, **caractérisée en ce que** l'on prévoit un second actionneur (72) agissant directement ou indirectement sur le premier actionneur (58).

9. Presse à balles rondes (10) selon une ou plusieurs des revendications précédentes, **caractérisée en ce que** le premier bras de pivot (14) est doté d'un rouleau mobile pour ralentir les moyens de pressage de balles (22) et avec deux rouleaux mobiles (20, a, 20, b) pour fermer la chambre de compression de balles (36) dans une région supérieure.

10. Presse à balles rondes (10) selon une ou plusieurs des revendications précédentes, **caractérisée en ce que** le second bras de pivot (16) est prévu avec des rouleaux mobiles (20, d) au niveau de ses extrémités.

11. Presse à balles rondes (10) selon une ou plusieurs des revendications précédentes, **caractérisée en ce que** le second bras (16) a des pattes (46) qui sont situées à l'extérieur de la chambre de compression de balles (36).

12. Presse à balles rondes (10) selon une ou plusieurs des revendications précédentes, **caractérisée en ce que** l'actionneur (58) est agencé de sorte qu'il n'est pas complètement rétracté, lorsque le procédé de formation de balle commence.

13. Presse à balles rondes (10) selon une ou plusieurs des revendications précédentes, **caractérisée en ce que** les bras de pivot (14, 16) tournent dans le même sens ou dans un sens opposé pendant la formation des balles.

14. Presse à balles rondes (10) selon une ou plusieurs des revendications précédentes, **caractérisée en ce que** l'on prévoit un autre rouleau fixe (18, L) de manière adjacente audit rouleau fixe (18, C) et **en ce que** ledit autre rouleau (18, L) est positionné dans l'extension radiale du châssis de pivot de déchargement (54) par rapport à son axe de pivot (56).

15. Presse à balles rondes (10) selon une ou plusieurs des revendications précédentes, **caractérisée en ce que** le châssis de pivot de déchargement (54) est prévu avec trois rouleaux mobiles (20, g, 20, h, 20, i) alors que les moyens de pressage de balles (22) sont acheminés entre eux.
